# EUROPÄISCHE PATENTSCHRIFT

(11) **EP 1 448 407 B1**
(45) Veröffentlichungstag und Bekanntmachung des Hinweises auf die Patenterteilung: **08.07.2009**
(21) Anmeldenummer: 01994673.0
(22) Anmeldetag: 19.11.2001
(51) Int. Cl.: B60Q 3/02

(54) **Optischer Blendungsbegrenzer**
Optical glare limiter
Limiteur d'éblouissement optique

(43) Veröffentlichungstag der Anmeldung: 25.08.2004
(73) Patentinhaber: uwe braun GmbH, 19309 Lenzen (Elbe) (DE)
(72) Erfinder: Braun, Uwe Peter, 14467 Potsdam (DE)
(74) Vertreter: Cohausz & Florack
(86) Internationale Anmeldenummer: PCT/EP2001/013345
(87) Internationale Veröffentlichungsnummer: WO 2003/043856

(56) Entgegenhaltungen:
- EP-A- 0 515 921
- DE-A- 2 305 503
- DE-A- 19 654 358
- DE-A- 19 859 195
- DE-A- 19 941 125

## Beschreibung

Die Erfindung betrifft einen optischen Blendungsbegrenzer, insbesondere für Kraftfahrzeuge, mit mindestens einem Lichtempfängerbaustein und mindestens einer Lichtquelle, deren Lichtstrahlung in Abhängigkeit von der Lichtstrahlung einer äußeren Blendungsquelle regelbar ist.

Es ist bekannt, dass die Fähigkeit des menschlichen Auges, Helligkeits-, Farb- und Formenstrukturen der Umgebung mehr oder weniger schnell erfassen und wahrnehmen zu können, neben seiner Adaptionsfähigkeit wesentlich von der Leuchtdichte der auf das Auge auftreffenden Strahlung und den Leuchtdichteunterschieden im Gesichtsfeld abhängt. Bei zu hohen Leuchtdichten im Gesichtsfeld kann schließlich die Wahrnehmungsfähigkeit und damit auch die Sehleistung des Auges wesentlich beeinträchtigt werden. Ein solcher, die Grundfunktionen des Auges merklich beeinträchtigender Einfluß wird als Blendung bezeichnet.

Es ist des weiteren bekannt, dass im nächtlichen Straßenverkehr nicht wenige Verkehrsunfälle auf unterlassene oder falsche Reaktionen des Fahrzeugführers aufgrund von Blendungen seiner Augen zurückzuführen sind. Bei nächtlichen Fahrten ist die Ciliar-Muskulatur der Augen je nach dem Fixpunkt der Betrachtung mehr oder weniger angespannt. Die Pupille ist verhältnismäßig weit geöffnet und das Auge an die jeweils im Gesichtsfeld herrschende mittlere Leuchtdichte angepaßt. Ändert sich zum Beispiel die mittleren Leuchtdichte durch das Licht eines entgegenkommenden Fahrzeuges, so benötigt der Vorgang der Adaption von einem Adaptionszustand zum anderen eine gewisse Zeit, die von der Vorbelichtung des Auges, der Richtung der Adaption und der Differenz der Leuchtdichten vor und nach der Adaption abhängig ist. Je größer die durch das Licht entgegenkommender Fahrzeuge bedingte Differenz der Leuchtdichte vor der Adaption ist, um so stärker wird die Netzhaut gereizt, erhöhen sich die Anforderungen an die Geschwindigkeit der Hell- und Dunkeladaption und führt das im Augeninnern erzeugte Streulicht zu einem Schleier auf der Netzhaut und schließlich zu einer verminderten Sehleistung. Die Folgen sind unter anderem, dass entgegenkommende Fahrzeuge oft nur unscharf oder zu spät erkannt und Entfernungen falsch eingeschätzt und dadurch nicht angemessene Reaktionen des Fahrzeugführers ausgelöst werden.

Der wachsende Anteil von Kraftfahrzeugscheinwerfern auf Xenon-Basis verstärkt noch die Gefahren, die von den schädlichen Auswirkungen der höheren Leuchtkraft dieses Lampentyps im Verhältnis zu denen herkömmlicher Halogen-Scheinwerfer ausgehen. Untersuchungen haben ergeben, dass sich Testpersonen aller Altersgruppen grundsätzlich und unabhängig von messbaren Beeinträchtigungen der Sehkraft von Xenon-Licht gestört fühlen. Vor allem ältere Menschen konnten bei Xenon-Gegenlicht bestimmte Kontraste nicht mehr erkennen (Der Spiegel, 7/1998, Seiten 168 ff).

Aus der auf den Anmelder zurückgehenden gattungsgemäßen DE 199 41 125 A1 ist ein optischer Blendüngsbegrenzer der eingangs genannten Art bekannt. Der Blendungsbegrenzer besteht aus einem Lichtempfängerbaustein und einer Lichtquelle, wobei die Lichtstrahlung der Lichtquelle in Abhängigkeit von der Intensität der auf dem Lichtempfängerbaustein fallenden Lichtstrahlung einer äußeren Blendungsquelle mittels einer elektronischen Steuerung so regelbar ist, dass die Lichtstrahlung im Gesichtsfeld eine geminderte Blendwirkung aufweist. Die Lichtquelle ist dabei mit einem Reflektor und einem Prisma versehen und zusammen mit dem Lichtempfängerbaustein in einem Gehäuse angeordnet, das vorzugsweise schwenkbar oder ausklappbar an oder in der Sonnenblende des Kraftfahrzeuges angeordnet ist. Das Prisma ist beispielsweise als Längsprisma mit in Sägezahnform ausgebildeten und gegenläufig angeordneten Prismen ausgeführt, wobei die Prismen die Lichtstrahlung der Lichtquelle in zwei Lichtströme ablenken. Ferner kann das Prisma mit einem Diffuser in Form einer opalen Scheibe versehen sein. Als Lichtquelle wird eine handelsübliche Glassockellampe verwendet. Allerdings können als Lichtquelle auch Leuchtdioden eingesetzt werden.

Das Prinzip dieses bekannten optischen Blendungsbegrenzers ist grundsätzlich vorteilhaft. Es hat sich jedoch gezeigt, dass dieser Blendungsbegrenzer ein relativ großes Bauvolumen aufweist, wenn er eine relativ große, diffus leuchtende Fläche zur Verminderung der Blendwirkung besitzen soll.

Der vorliegenden Erfindung liegt daher die Aufgabe zugrunde, einen verbesserten Blendungsbegrenzer zu schaffen, der relativ flach ausgeführt werden kann und dennoch eine relativ große, weitgehend homogen leuchtende Fläche aufweist.

Erfindungsgemäß wird diese Aufgabe bei einem gattungsgemäßen Blendungsbegrenzer dadurch gelöst, dass der Lichtquelle ein flächiger Lichtleiter zugeordnet ist, der mindestens eine schmale Randfläche und eine flächige Lichtaustrittsfläche aufweist, wobei das Licht der Lichtquelle über die schmale Randfläche einkoppelbar ist und der Flächeninhalt der Lichtaustrittsfläche ein Vielfaches des Flächeninhaltes der der Lichteinkopplung dienenden schmalen Randfläche beträgt, und wobei der Lichtleiter an seiner der Lichtaustrittsfläche gegenüberliegenden Seite eine reflektierende Beschichtung und/oder Bedruckung aufweist, deren Schichtdicke unterschiedlich stark ausgebildet ist und mit zunehmender Entfernung von der Lichtquelle stärker wird oder aus einer Vielzahl einzelner Farb- und/oder Bildelemente gebildet ist, die mit unterschiedlicher Dichte angeordnet sind, derart, dass die Dichte mit zunehmender Entfernung von der Lichtquelle zunimmt.

Der erfindungsgemäße optische Blendungsbegrenzer lässt sich in sehr flacher Form realisieren, wobei er sich trotz seines relativ geringen Bauvolumens durch eine relativ große, weitgehend homogen diffus leuchtende Fläche auszeichnet.

Eine bevorzugte Ausgestaltung des erfindungsgemäßen Blendungsbegrenzers ist dadurch gekennzeichnet, dass die Lichtquelle aus in Reihe angeordneten Lichtdioden gebildet ist. Hierdurch wird eine relativ gleichmäßige Lichteinkopplung in den flächigen Lichtleiter und damit eine weitgehend homogene Lichtstrahlung des Blendungsbegrenzers erzielt.

Eine andere bevorzugte Ausgestaltung des erfindungsgemäßen Blendungsbegrenzers besteht darin, dass die Lichtquelle zusätzlich Leuchtdioden aufweist, die eine Strahlung im UV-A-Spektrum emittieren. Versuche haben gezeigt, dass eine Strahlung im UV-A-Spektrum einer Ermüdung von Testpersonen entgegenwirkt. Durch die Verwendung von UV-A-Leuchtdioden in Ergänzung zu herkömmlichen Leuchtdioden kann somit die ermüdungsfreie Fahrzeit eines Fahrzeugführers verlängert werden.

Nach einer weiteren vorteilhaften Ausgestaltung kann der erfindungsgemäße Blendungsbegrenzer mehrere Lichtquellen und mehrere zueinander beabstandete Lichtempfängerbausteine aufweisen, wobei die Lichtempfängerbausteine mit einer Steuereinrichtung verbunden sind, durch welche die Lichtstrahlung der jeweiligen Lichtquelle in Abhängigkeit von der Lichtstrahlung mindestens einer Blendungsquelle und mindestens einer anderen Lichtquelle derart regelbar ist, dass der Blendungsbegrenzer an seiner Lichtaustrittsfläche mit Bereichen unterschiedlicher Helligkeit leuchtet, derart, dass ein Bereich, der nahe der anderen Lichtquelle liegt, weniger hell leuchtet als ein Bereich, der von der anderen Lichtquelle weiter entfernt liegt. Diese Ausgestaltung ermöglicht die Einstellung von Bereichen unterschiedlicher Lichtstrahlung bzw. Helligkeit an der Lichtaustrittsfläche des Blendungsbegrenzers in Bezug auf andere Lichtquellen, wie z.B. Fahrzeuginnenraumleuchten, so dass im Gesichtsfeld des Fahrzeugführers stets insgesamt eine ausgewogene Beleuchtung sichergestellt ist. Dabei werden die Intensitäten der von einer äußeren Blendungsquelle und einer im Fahrzeuginnenraum angeordneten Lichtquelle, z.B. einer Leselampe, ausgehenden Lichtstrahlung mittels der mindestens zwei Lichtempfängerbausteine erfasst und die Ausgangssignale der Lichtempfängerbausteine von der Steuereinrichtung ausgewertet.

Die Lichtquelle und die der Lichteinkopplung dienende schmale Randfläche des Lichtleiters sind in Bezug auf eine vor Blendwirkung zu schützende Person vorzugsweise derart angeordnet, dass die Strahlungsrichtung des in den Lichtleiter eingekoppelten Lichtes vom Gesichtsfeld der vor Blendwirkung zu schützenden Person abgewandt ist. Hierdurch wird eine Blendung der Person durch die Lichtquelle des Blendungsbegrenzers selbst ausgeschlossen.

Der flächige Lichtleiter kann aus einem massiven lichtleitenden Körper bestehen oder alternativ einen lichtleitenden Hohlraum aufweisen, der durch eine lichtdurchlässige Platte und eine lichtundurchlässige Platte begrenzt ist.

Eine weitere Lösung der der Erfindung zugrundeliegenden Aufgabe besteht darin, dass die Lichtquelle aus organischen Leuchtdioden (sogenannten OLED's) gebildet ist, die auf mindestens einem Träger aus Glas oder mindestens einem biegsamen, transparenten Träger aus Kunststoff aufgebracht sind.

Weitere bevorzugte und vorteilhafte Ausgestaltungen des erfindungsgemäßen Blendungsbegrenzers sind in den Unteransprüchen angegeben.

Nachfolgend wird die Erfindung anhand einer mehrere Ausführungsbeispiele darstellenden Zeichnung näher erläutert. Es zeigen in schematischer Darstellung:
- Fig. 1: eine Querschnittansicht auf einen optischen Blendungsbegrenzer mit einem flächigen Lichtleiter gemäß einer ersten Ausführungsform,
- Fig. 2: eine perspektivische Ansicht auf den Blendungsbegrenzer gemäß Fig. 1,
- Fig. 3: eine Draufsicht auf einen Längsschnitt durch den Blendungsbegrenzer gemäß Fig. 1 im Bereich der Innenseite des flächigen Lichtleiters,
- Fig. 4: eine Querschnittansicht auf einen zweiteiligen optischen Blendungsbegrenzer mit zwei flächigen Lichtleitern gemäß einer zweiten Ausführungsform,
- Fig. 5: eine perspektivische Ansicht auf den Blendungsbegrenzer gemäß Fig. 4, und
- Fig. 6: eine Querschnittansicht auf einen optischen Blendungsbegrenzer mit einem flächigen Lichtleiter gemäß einer dritten Ausführungsform.

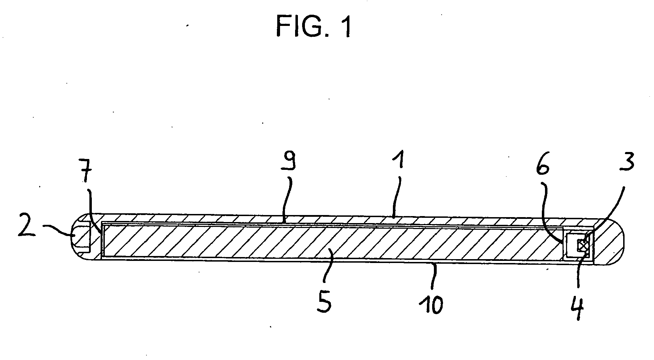

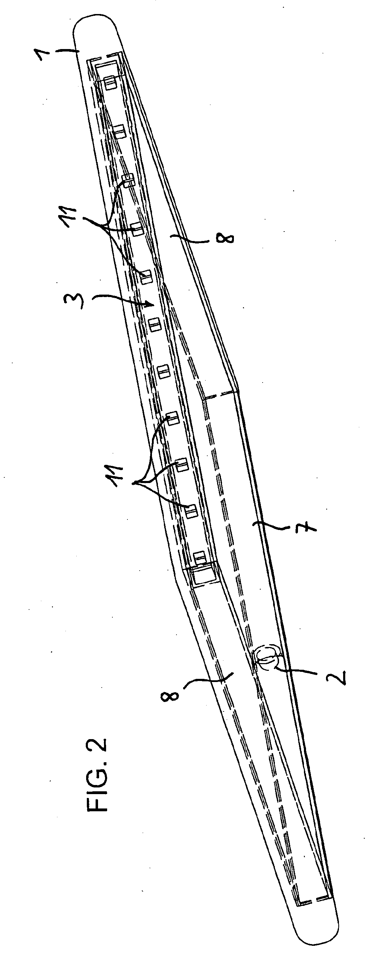

Der in den Figuren 1 bis 3 dargestellte optische Blendungsbegrenzer weist ein Gehäuse 1 auf, das vorzugsweise als Sonnenblende zur Montage in einem Kraftfahrzeug ausgebildet ist. Das Gehäuse bzw. die Sonnenblende 1 weist an ihrer vorderen Längsseite einen Lichtempfängerbaustein 2 auf, der im Betriebszustand des Blendungsbegrenzers der Frontscheibe des Kraftfahrzeuges zugewandt ist. Als Lichtempfängerbaustein wird eine Fotodiode verwendet. Alternativ können jedoch auch Fototransistoren, Fotowiderstände, Licht/Frequenzwandler, Licht/Spannungswandler, Fluoreszens-Kollektoren oder Solarzellenleisten verwendet werden.

Ferner ist in dem Gehäuse 1 eine Lichtquelle 3 angeordnet, die mit einem Reflektor 4 versehen ist. Der Lichtquelle 3 ist ein flächiger, plattenförmiger Lichtleiter 5 zugeordnet, in den das Licht der Lichtquelle 3 über eine schmale Randfläche bzw. Schnittkante 6 eingekoppelt wird. Der Reflektor 4 lenkt das von der Lichtquelle 3 emittierte Licht auf die Randfläche 6. Die Lichtquelle 3 und die Randfläche 6 des Lichtleiters 5 sind in Bezug auf eine vor Blendwirkung zu schützende Person so angeordnet, dass die Strahlungsrichtung des in den Lichtleiter 5 eingekoppelten Lichtes vom Gesichtsfeld der vor Blendwirkung zu schützenden Person abgewandt ist.

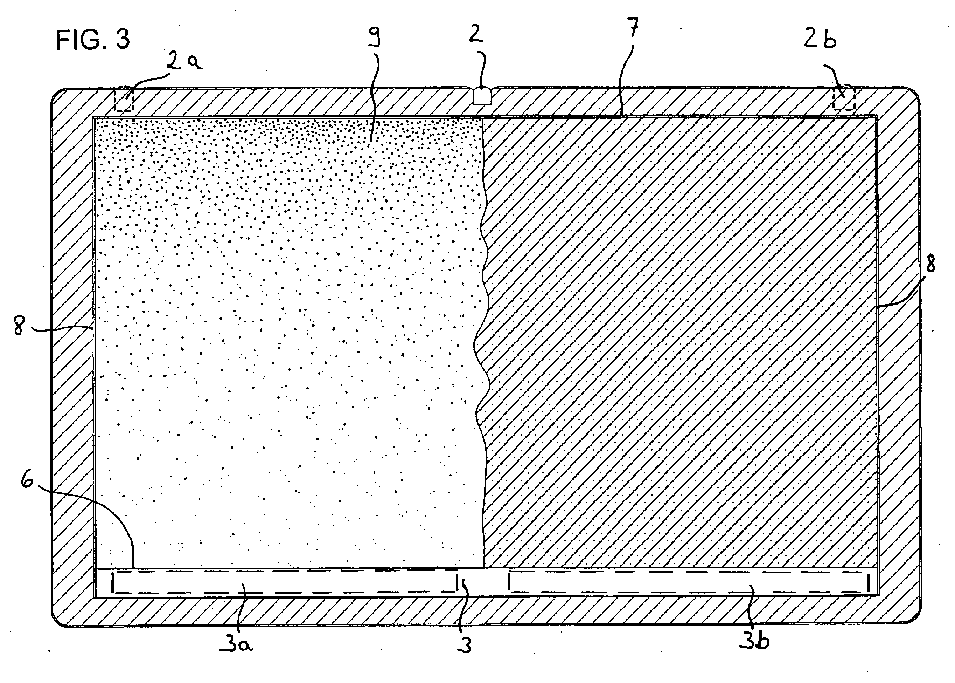

Die der Lichtquelle 3 gegenüberliegende Randfläche 7 ist mit einer reflektierenden Schicht, beispielsweise einer Spiegelfläche versehen. Ebenso sind vorzugsweise auch die mit 8 bezeichneten Randflächen des flächigen Lichtleiters 5 mit einer reflektierenden Schicht versehen. Die Innenseite 9 des Lichtleiters 5 ist in Fig. 3 dargestellt. Sie ist ebenfalls mit einer Spiegelfläche oder einer anderen reflektierenden Schicht versehen, wie in der rechten Hälfte von Fig. 3 durch eine Schraffur dargestellt ist. Alternativ kann die Innenseite 9 des Lichtleiters 5 auch mit einer reflektierenden Bedruckung versehen sein, wie in der linken Hälfte von Fig. 3 schematisch dargestellt ist. Die reflektierende Bedruckung, die beispielsweise aus fluoreszierendem Farbmaterial besteht, weist eine unterschiedlich starke Schichtdicke auf, wobei die Schichtdicke mit zunehmender Entfernung von der Lichtquelle 3 stärker wird. Alternativ kann die Bedruckung auch aus Farbelementen, z.B. Punkten, Streifen oder sonstigen kleinen Elementen mit regelmäßiger und/oder unregelmäßiger Kontur bestehen, wobei die Farbelemente mit unterschiedlicher Dichte angeordnet sind, und zwar derart, dass die Dichte mit zunehmender Entfernung von der Lichtquelle 3 allmählich zunimmt. Dies ist schematisch durch eine in Richtung des Lichtempfängerbausteins 2 zunehmende Punktdichte angedeutet.

Die Außenseite des Lichtleiters 5 bildet die Lichtaustrittsfläche 10, von der aus das in den Lichtleiter 5 eingekoppelte Licht in Richtung des Gesichtsfeldes einer vor einer Blendwirkung zu schützenden Person emittiert wird. Der Flächeninhalt der Lichtaustrittsfläche 10 beträgt ein Vielfaches des Flächeninhaltes der Randfläche 6.

Der plattenförmige Lichtleiter 5 ist im dargestellten Ausführungsbeispiel massiv ausgebildet und besteht aus Glas oder einem glasartigen Kunststoff, beispielsweise Acrylglas.

Im Ausführungsbeispiel gemäß den Figuren 1 bis 3 besteht die Lichtquelle 3 aus mehreren in Reihe angeordneten Leuchtdioden 11. Die Leuchtdioden 11 bilden somit eine Leuchtdiodenleiste. Die Anzahl und der Abstand der Leuchtdioden 11 zueinander ist nicht auf das dargestellte Ausführungsbeispiel beschränkt. Vielmehr kann die Anzahl der eingesetzten Leuchtdioden auch größer und ihr gegenseitiger Abstand geringer sein. Der Blendungsbegrenzer kann neben herkömmlichen Leuchtdioden auch Leuchtdioden umfassen, die eine Strahlung im UV-A-Spektrum emittieren. Es ist auch möglich, dem plattenförmigen Lichtleiter 5 zwei Leuchtdiodenleisten zuzuordnen, indem die gegenüberliegenden Querrandflächen bzw. Querschnittkanten 8 des Lichtleiters 5 als Lichteinkoppelstellen genutzt werden.

Der Blendungsbegrenzer umfasst ferner eine (nicht dargestellte) elektronische Steuerung, die dazu dient, dass die Lichtstrahlung der Lichtquelle in Abhängigkeit der Lichtstrahlung einer durch den Lichtempfängerbaustein 2 erfassten äußeren Blendungsquelle geregelt wird. Sobald das blendend wirkende Licht eines entgegenkommenden Fahrzeuges auf den Lichtempfängerbaustein 2 trifft, wird in Abhängigkeit von dessen Leuchtdichte die Lichtquelle 3 des Blendungsbegrenzers heller oder dunkler, so dass sich dadurch der Leuchtdichteunterschied zwischen dem Licht des entgegenkommenden Fahrzeugs und der bis dahin gegebenen mittleren Leuchtdichte im Gesichtsfeld des Fahrzeugführers verringert.

Der Blendungsbegrenzer bzw. seine elektronische Steuerung ist mit einem (nicht dargestellten) Lichtsensor ausgestattet, der die Helligkeit der Umgebungslichtes erfasst. Das Ausgangssignal dieses Lichtsensors wird in der elektronischen Steuerung ausgewertet. Bei Unterschreitung eines vorgebbaren Helligkeitswertes, etwa bei Dämmerung, wird die Lichtquelle des Blendungsbegrenzers durch die elektronische Steuerung automatisch auf eine vorgebbare Grundhelligkeit eingeschaltet. Mittels eines (nicht dargestellten) Schalters kann unabhängig von einer Stand-By-Stellung durch Wahl einer anderen Schaltstufe die Grundhelligkeit der Lichtquelle 3 variiert werden. Es ist somit möglich, die Grundhelligkeit der Lichtquelle 3 und damit die Grundhelligkeit der Lichtaustrittsfläche 10 im Gesichtsfeld des Fahrzeugführers entsprechend der individuellen optischen Wahrnehmungsfähigkeit manuell einzustellen. Die Stromversorgung des Blendungsbegrenzers erfolgt mit der Bordspannung des Kraftfahrzeuges.

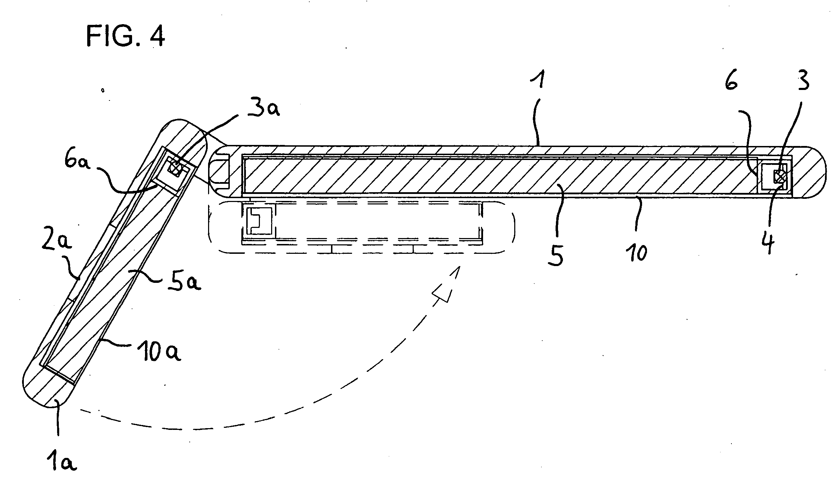

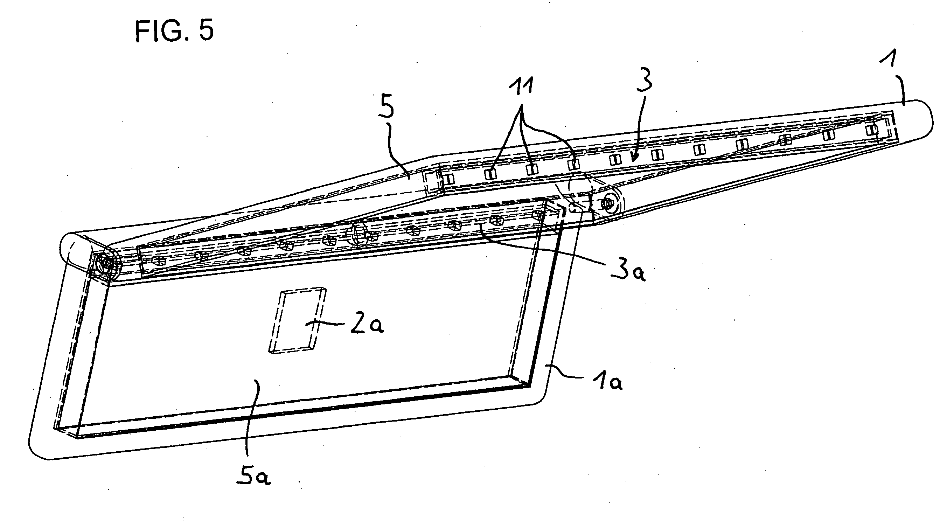

In den Figuren 4 und 5 ist eine zweite Ausführungsform des erfindungsgemäßen optischen Blendungsbegrenzers dargestellt. Diese Ausführungsform unterscheidet sich von der Ausführungsform gemäß den Figuren 1 bis 3 dadurch, dass nun zwei Lichtquellen bzw. Leuchtdiodenleisten 3, 3a vorhanden sind, denen jeweils ein flächiger Lichtleiter 5, 5a zugeordnet ist, in den das Licht der jeweils zugeordneten Lichtquelle 3, 3a über eine schmale Randfläche 6, 6a einkoppelbar ist und der jeweils eine flächige Lichtaustrittsfläche 10, 10a aufweist, deren Flächeninhalt wiederum ein Vielfaches des Flächeninhaltes der der Lichteinkopplung dienenden schmalen Randfläche 6, 6a beträgt. Die beiden flächigen Lichtleiter 5, 5a sind dabei zusammen mit den ihnen zugeordneten Lichtquellen 3, 3a jeweils an einem Träger bzw. Gehäuse 1, 1a befestigt. Die beiden Gehäuse 1, 1a sind an ihren Längsseiten schwenkbar miteinander verbunden. Der Blendungsbegrenzer gemäß Fig. 4 besitzt somit gegenüber dem Blendungsbegrenzer gemäß Fig. 1 insgesamt eine größere Lichtaustrittsfläche. Ein Lichtempfängerbaustein 2a ist bei dieser Ausführungsform an der Rückseite bzw. Unterseite des verschwenkbaren Gehäuses 1a des Blendungsbegrenzers in einer Ausnehmung angeordnet. Der verschwenkbare Teil 1a des Blendungsbegrenzers ist kleiner als der feststehende Teil 1. Der verschwenkbare Teil 1a kann bis unter den größeren, feststehenden Teil 1 geschwenkt werden, wie in Fig. 4 durch gestrichelte Linien angedeutet ist. Im eingeschwenkten (gestrichelt dargestellten) Zustand liegen die Lichtaustrittsflächen 10, 10a einander dicht gegenüber.

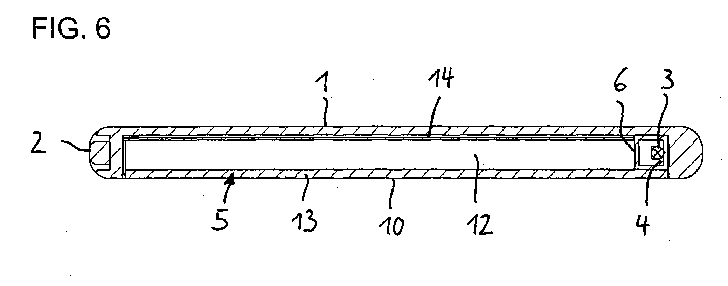

Eine weitere Ausführungsform des erfindungsgemäßen Blendungsbegrenzers ist in Fig. 6 dargestellt. Diese Ausführungsform unterscheidet sich von der in den Figuren 1 bis 3 gezeigten Ausführungsform dadurch, dass der flächige Lichtleiter nicht als massiver Körper ausgebildet ist, sondern einen lichtleitenden Hohlraum 12 aufweist, der durch eine lichtdurchlässige Platte 13 und eine lichtundurchlässige Platte 14 begrenzt ist. Die beiden im wesentlichen parallel zueinander angeordneten Platten 13, 14 können jeweils aus lichtdurchlässigem Kunststoff bestehen, wobei die an der Innenseite des Blendungsbegrenzers angeordnete Platte 14 mit einer reflektierenden Beschichtung und/oder Bedruckung versehen ist.

Der in Figur 6 gezeigte Blendungsbegrenzer kann ebenso wie der Blendungsbegrenzer gemäß Fig. 4 zweiteilig ausgeführt werden, um eine Vergrößerung der Lichtaustrittsfläche zu erzielen.

Die Erfindung ist nicht auf die vorstehend beschriebenen Ausführungsformen beschränkt. Vielmehr sind mehrere Varianten denkbar, die auch bei grundsätzlich abweichender Gestaltung von dem in den Ansprüchen wiedergegebenen Erfindungsgedanken Gebrauch machen. So ist es beispielsweise auch möglich, die Lichtquelle 3 des Blendungsbegrenzers aus organischen Leuchtdioden zu bilden, die auf mindestens einem Träger aus Glas oder mindestens einem biegsamen, transparenten Träger aus Kunststoff aufgebracht sind.

Ferner kann der erfindungsgemäße Blendungsbegrenzer auch mehrere unabhängig voneinander steuerbare Lichtquellen 3 und mehrere zueinander beabstandete Lichtempfängerbausteine 2 aufweisen, wobei die Lichtempfängerbausteine 2 mit einer Steuereinrichtung verbunden sind, durch welche die Lichtstrahlung der jeweiligen Lichtquelle 3 in Abhängigkeit von der Lichtstrahlung mindestens einer Blendungsquelle und mindestens einer anderen Lichtquelle (z.B. einer Leseleuchte im Fahrzeuginnenraum) derart regelbar ist, dass der Blendungsbegrenzer an seiner Lichtaustrittsfläche 10 mit Bereichen unterschiedlicher Helligkeit leuchtet, derart, dass ein Bereich, der nahe der anderen Lichtquelle liegt, weniger hell leuchtet als ein Bereich, der von der anderen Lichtquelle weiter entfernt liegt. Auf diese Weise kann eine ausgewogene Beleuchtung des Gesichtsfeldes der vor einer Blendwirkung zu schützenden Person erzielt werden, so dass beide Augen der zu schützenden Person eine Lichtstrahlung mit in etwa gleicher Leuchtdichte wahrnehmen. In Fig. 3 ist die Verwendung mehrerer unabhängig voneinander steuerbarer Lichtquellen 3a, 3b sowie mehrerer zueinander beabstandeter Lichtempfängerbausteine 2a, 2b durch Strichlinien angedeutet.

## Patentansprüche

1. Optischer Blendungsbegrenzer, insbesondere für Kraftfahrzeuge, mit mindestens einem Lichtempfängerbaustein (2) und mindestens einer Lichtquelle (3), deren Lichtstrahlung in Abhängigkeit von der Lichtstrahlung einer Blendungsquelle regelbar ist,
**dadurch gekennzeichnet, dass** der Lichtquelle (3) ein flächiger Lichtleiter (5) zugeordnet ist, der mindestens eine schmale Randfläche (6) und eine flächige Lichtaustrittsfläche (10) aufweist, wobei das Licht der Lichtquelle (3) über die schmale Randfläche (6) einkoppelbar ist und der Flächeninhalt der Lichtaustrittsfläche (10) ein Vielfaches des Flächeninhaltes der der Lichteinkopplung dienenden schmalen Randfläche (6) beträgt, und wobei der Lichtleiter (5) an seiner der Lichtaustrittsfläche (10) gegenüberliegenden Seite (9) eine reflektierende Beschichtung und/oder Bedruckung aufweist, deren Schichtdicke unterschiedlich stark ausgebildet ist und mit zunehmender Entfernung von der Lichtquelle (3) stärker wird oder aus einer Vielzahl einzelner Farb- und/oder Bildelemente gebildet ist, die mit unterschiedlicher Dichte angeordnet sind, derart, dass die Dichte mit zunehmender Entfernung von der Lichtquelle (3) zunimmt.

2. Optischer Blendungsbegrenzer nach Anspruch 1, **dadurch gekennzeichnet, dass** der Lichtleiter (5) eine reflektierende Randfläche (7) aufweist, die der der Lichteinkopplung dienenden schmalen Randfläche (6) gegenüberliegt.

3. Optischer Blendungsbegrenzer nach Anspruch 1 oder 2, **dadurch gekennzeichnet, dass** mit Ausnahme der der Lichteinkopplung dienenden schmalen Randfläche (6) alle schmalen Randflächen (7, 8) des Lichtleiters (5) eine reflektierende Beschichtung aufweisen.

4. Optischer Blendungsbegrenzer nach einem der Ansprüche 1 bis 3, **dadurch gekennzeichnet, dass** die Lichtquelle (3) mit einem Reflektor (4) versehen ist, der von der Lichtquelle (3) emittiertes Licht auf die der Lichteinkopplung dienende schmale Randfläche (6) des Lichtleiters (5) lenkt.

5. Optischer Blendungsbegrenzer nach einem der Ansprüche 1 bis 4, **dadurch gekennzeichnet, dass** die Lichtquelle (3) aus in Reihe angeordneten Leuchtdioden (11) gebildet ist.

6. Optischer Blendungsbegrenzer nach einem der Ansprüche 1 bis 5, **dadurch gekennzeichnet, dass** die Lichtquelle Leuchtdioden aufweist, die UV-A-Strahlung emittieren.

7. Optischer Blendungsbegrenzer nach einem der Ansprüche 1 bis 6, **dadurch gekennzeichnet, dass** die Lichtquelle (3) und die der Lichteinkopplung dienende schmale Randfläche (6) des Lichtleiters (5) in Bezug auf eine vor Blendwirkung zu schützende Person derart angeordnet sind, dass die Strahlungsrichtung des in den Lichtleiter (5) eingekoppelten Lichtes vom Gesichtsfeld der vor Blendwirkung zu schützenden Person abgewandt ist.

8. Optischer Blendungsbegrenzer nach einem der Ansprüche 1 bis 7, **dadurch gekennzeichnet, dass** der Lichtleiter (5) aus einem massiven lichtleitenden Körper gebildet ist.

9. Optischer Blendungsbegrenzer nach einem der Ansprüche 1 bis 7, **dadurch gekennzeichnet, dass** der Lichtleiter (5) einen Hohlraum (12) aufweist, der durch eine lichtdurchlässige Platte (13) und eine lichtundurchlässige Platte (14) begrenzt ist.

10. Optischer Blendungsbegrenzer, insbesondere für Kraftfahrzeuge, mit mindestens einem Lichtempfängerbaustein (2) und mindestens einer Lichtquelle, deren Lichtstrahlung in Abhängigkeit von der Lichtstrahlung einer Blendungsquelle regelbar ist,
**dadurch gekennzeichnet, dass** die Lichtquelle aus organischen Leuchtdioden gebildet ist, die auf mindestens einem Träger aus Glas oder mindestens einem biegsamen, transparenten Träger aus Kunststoff aufgebracht sind.

11. Optischer Blendungsbegrenzer nach einem der Ansprüche 1 bis 10, **dadurch gekennzeichnet, dass** der Blendungsbegrenzer in mindestens zwei Gehäuse (1, 1a) unterteilt ist, die jeweils eine Lichtquelle sowie eine Lichtaustrittsfläche aufweisen und schwenkbar miteinander verbunden sind.

12. Optischer Blendungsbegrenzer nach einem der Ansprüche 1 bis 11, **dadurch gekennzeichnet, dass** mehrere Lichtquellen (3a, 3b) und mehrere zueinander beabstandete Lichtempfängerbausteine (2a, 2b) vorhanden sind, wobei die Lichtempfängerbausteine mit einer Steuereinrichtung verbunden sind, durch welche die Lichtstrahlung der jeweiligen Lichtquelle (3a, 3b) in Abhängigkeit von der Lichtstrahlung mindestens einer Blendungsquelle und mindestens einer anderen Lichtquelle derart regelbar ist, dass der Blendungsbegrenzer an seiner Lichtaustrittsfläche (10) mit Bereichen unterschiedlicher Helligkeit leuchtet, derart, dass ein Bereich, der nahe der anderen Lichtquelle liegt, weniger hell leuchtet als ein Bereich, der von der anderen Lichtquelle weiter entfernt liegt.

## Claims

1. Optical glare limiter, particularly for motor vehicles, with at least one light receiving component (2) and at least one light source (3), the light emission of which can be controlled in dependence on the light emission of a source of glare,
**characterised in that** assigned to the light source (3) is a flat light guide (5) which has at least one narrow edge surface (6) and a flat light emission surface (10), wherein the light from the light source (3) can be launched via the narrow edge surface (6) in the light guide, and the area of the light emission surface (10) is a multiple of the narrow edge surface (6) used for launching light, and wherein the light guide (5) has on its side opposite the light emission surface (10) a reflecting coating and/or printing which is of varying layer thickness so that the layer thickness increases with increasing distance from the light source (3) or which is formed of a number of individual colour elements and/or picture elements which are of varying densities in such a way that the density increases with increasing distance from the light source (3).

2. Optical glare limiter according to claim 1, **characterised in that** the light guide (5) has a reflecting edge surface (7) which lies opposite the narrow edge surface (6) used for launching light.

3. Optical glare limiter according to claim 1 or 2,
**characterised in that** with the exception of the narrow edge surface (6) used for launching light, all the narrow edge surfaces (7, 8) of the light guide (5) have a reflecting coating.

4. Optical glare limiter according to any one of claims 1 to 3, **characterised in that** the light source (3) is provided with a reflector (4) which deflects the light emitted from the light source (3) to the narrow edge surface (6), used for launching light, of the light guide (5).

5. Optical glare limiter according to any one of claims 1 to 4, **characterised in that** the light source (3) comprises light-emitting diodes (11) arranged in series.

6. Optical glare limiter according to any one of claims 1 to 5, **characterised in that** the light source has light-emitting diodes which emit UV-A rays.

7. Optical glare limiter according to any one of claims 1 to 6, **characterised in that** the light source (3) and narrow edge surface (6), used for launching light, of the light guide (5) are arranged with regard to the person to be protected from the effect of glare in such a way that the direction of emission of the light launched in the light guide (5) is away from the field of vision of the person to be protected against the effect of glare.

8. Optical glare limiter according to any one of claims 1 to 7, **characterised in that** the light guide (5) is formed of a massive light-guiding body.

9. Optical glare limiter according to any one of claims 1 to 7, **characterised in that** the light guide (5) has a hollow space (12) which is bounded by a light-permeable plate (13) and a light-impermeable plate (14).

10. Optical glare limiter, particularly for motor vehicles, with at least one light receiving component (2) and at least one light source, the light emission of which can be controlled in dependence on the light emission of a source of glare,
**characterised in that** the light source is formed of organic light-emitting diodes, which are arranged on at least one glass carrier or on at least one flexible, transparent carrier made of plastic.

11. Optical glare limiter according to any one of claims 1 to 10, **characterised in that** the glare limiter is divided into at least two casings (1, 1a), which each have a light source and a light emission surface and are connected to each other in a pivoting manner.

12. Optical glare limiter according to any one of claims 1 to 11, **characterised in that** several light sources (3a, 3b) and several light receiving components (2a, 2b), which are at a distance from each other, are present, whereby the light receiving components are connected to a control device by means of which the light emission from the relevant light source (3a, 3b) can be controlled in dependence on the light emission of at least one source of glare and at least one other light source in such a way that at its light emission surface (10) the glare limiter shines with areas of differing brightness in such a way that an area lying close to the other light source shines less brightly than an area lying further away from the other light source.

## Revendications

1. Limiteur d'éblouissement optique, en particulier pour véhicules automobiles, avec au moins un module récepteur de lumière (2) et au moins une source de lumière (3), dont le rayonnement lumineux peut être réglé en fonction du rayonnement lumineux d'une source d'éblouissement, **caractérisé en ce qu'**est associé à la source de lumière (3) un guide de lumière (5) plan, qui présente au moins une surface marginale étroite (6) et une surface d'émission de lumière (10) plane, la lumière de la source de lumière (3) pouvant être couplée par l'intermédiaire de la surface marginale étroite (6), et la superficie de la surface d'émission de lumière (10) étant un multiple de la superficie de la surface marginale étroite (6), qui sert au couplage de la lumière, et le guide de lumière (5) présentant, sur son côté (9) opposé à la surface d'émission de lumière (10), un revêtement et / ou une
impression réfléchissant, dont la couche est réalisée avec des épaisseurs différentes, qui augmentent en fonction de l'augmentation de l'éloignement de la source de lumière (3), ou qui est formé par de nombreux éléments de couleurs et / ou d'éléments d'images, qui sont disposés avec des densités différentes, de sorte que la densité augmente en fonction de l'augmentation de l'éloignement de la source lumineuse (3).

2. Limiteur d'éblouissement optique selon la revendication 1, **caractérisé en ce que** le guide de lumière (5) présente une surface marginale réfléchissante (7), qui est située à l'opposé de la surface marginale étroite (6), qui sert au couplage de la lumière.

3. Limiteur d'éblouissement optique selon revendication 1 ou 2, **caractérisé en ce que**, à l'exception de la surface marginale étroite (6), qui sert au couplage de la lumière, toutes les surfaces marginales étroites (7, 8) du guide de lumière (5) présentent un revêtement réfléchissant.

4. Limiteur d'éblouissement optique selon l'une des revendications 1 à 3, **caractérisé en ce que** la source de lumière (3) est pourvue d'un réflecteur (4) qui dirige la lumière, émise par la source de lumière (3), sur la surface marginale étroite (6) du guide de lumière (5), qui sert au couplage de la lumière.

5. Limiteur d'éblouissement optique selon l'une des revendications 1 à 4, **caractérisé en ce que** la source de lumière (3) est formée par des diodes électroluminescentes (11), qui sont disposées en rangée.

6. Limiteur d'éblouissement optique selon l'une des revendications 1 à 5, **caractérisé en ce que** la source de lumière présente des diodes électroluminescentes, qui émettent des rayonnements UV-A.

7. Limiteur d'éblouissement optique selon l'une des revendications 1 à 6, **caractérisé en ce que** la source de lumière (3) et la surface marginale étroite (6) du guide de lumière (5), qui sert au couplage de la lumière, sont disposées, par rapport à une personne devant être protégée contre les éblouissements, de sorte que la direction du rayonnement de la lumière, qui est couplée dans le guide de lumière (5), soit détournée du champ visuel de la personne à protéger contre l'éblouissement.

8. Limiteur d'éblouissement optique selon l'une des revendications 1 à 7, **caractérisé en ce que** le guide de lumière (5) est formé par un corps conducteur de lumière massif.

9. Limiteur d'éblouissement optique selon l'une des revendications 1 à 7, **caractérisé en ce que** le guide de lumière (5) présente une cavité (12), qui est limitée par une plaque transparente (13) et une plaque opaque (14).

10. Limiteur d'éblouissement optique, en particulier pour véhicules automobiles, avec au moins un module récepteur de lumière (2) et au moins une source de lumière, dont le rayonnement lumineux peut être réglé en fonction du rayonnement lumineux d'une source d'éblouissement, **caractérisé en ce que** la source de lumière est formée par des diode électroluminescentes organiques, qui sont installées sur au moins un support en verre ou sur au moins un support transparent, flexible en matière synthétique.

11. Limiteur d'éblouissement optique selon l'une des revendications 1 à 10, **caractérisé en ce que** ledit limiteur d'éblouissement est divisé en au moins deux boîtiers (1, 1a), qui présentent chacun une source de lumière ainsi qu'une surface d'émission de lumière, et qui sont reliés ensemble, en pouvant pivoter.

12. Limiteur d'éblouissement optique selon l'une des revendications 1 à 11, **caractérisé en ce que** sont prévues plusieurs sources de lumière (3a, 3b) et plusieurs modules récepteurs de lumière (2a, 2b), écartés les uns des autres, lesdits modules récepteurs de lumière étant reliés à un dispositif de commande, au moyen duquel le rayonnement lumineux de chaque source de lumière (3a, 3b) peut être réglé en fonction du rayonnement lumineux d'au moins une source d'éblouissement et d'au moins une autre source de lumière, de sorte que le limiteur d'éblouissement brille sur sa surface d'émission de lumière (10), avec des zones de luminosité différente, de sorte qu'une zone, qui est située à proximité de l'autre source de lumière, est moins lumineuse qu'une zone, qui est située à une plus grande distance de l'autre source de lumière.
